# EUROPEAN PATENT APPLICATION

(11) **EP 2 200 228 A1**
(43) Date of publication of application: **23.06.2010**
(21) Application number: 08106028.7
(22) Date of filing: 22.12.2008
(51) Int. Cl.: H04L 12/56

(54) **Method and system for forwarding of data packets**

(71) Applicant: Nokia Siemens Networks Oy, 02610 Espoo (FI)
(72) Inventor: Rogasch, Volker, 17493, Greifswald (DE)
(74) Representative: Bruglachner, Thomas E.

(57) **Abstract**

The present invention describes a method for forwarding of a data packet, and a corresponding system implementing this method, wherein data packets can be efficiently forwarded by an Ethernet switch, comprised of a plurality of Ethernet nodes, that are connected by way of Ethernet rings, at respective ring interfaces of the Ethernet nodes. When entering the Ethernet switch from an external interface, corresponding data packets, which are to be forwarded along the Ethernet ring, are tagged, by at least the physical address of the entry point in the ring, e.g. a slot address of the node, in which the packet was received, completed by a state, as an indicator for transmission history of the data packet, the data packet was circulating in the ring, or respectively of the connection status of the ring. By use of this tagging mechanism, it is possible, to have a different forwarding databases at each individual Ethernet node of the Ethernet switch, and to deal with data packets, which may be forwarded, which have no entry in a respective forwarding database of an Ethernet node, at which they are currently present. The method of the present invention, allows for a facilitated management of the individual forwarding databases, which need not to be updated with each respective data packet entering the Ethernet switch and takes the fact into account, that in high speed network environments, the size of an internal memory usable for address tables is limited due to implementation problems in accessing a respective external memory.

## Description

The present invention is about a method and system for efficiently forwarding data packets. Such a technology is for instance needed in the area of next generation optical access as well as in the domain of large Ethernet switches.

Generally through the increasingly wide spread use of broadband technologies, such as video on demand and internet television, in the recent years, the demand for switches and routers that are capable to handle more data packets at a time in order to cope with the increased data amounts that are transported over the internet, has increased. However, the processing of a large number of high speed data packets by layer 2/layer 3 switches/routers for the access range of telecommunication networks requires a very high performance of the associated equipment that by traditional methods can only by implemented partly or with very sophisticated technology.

In particular corresponding switches or routers face the problem, to provide high transmission rates for the data packets and at the same time have to deal with an increased number of subscriber interfaces. Evidently when using a single device, this leads to an increased size of the internal layer 2 /layer 3 address tables that allow for the forwarding of the data packets. Another problem going along with high speed transmission, is, that the local memory of the switches/routers needs to be fast enough, to enable a timely retrieval of the data required for a particular data packet in order to forward it to its required destination. As such, an obvious solution, to adapt the memory space to the increase size of the address tables by using external memory faces problems in the implementation due to the strict speed and performance requirements.

In order to deal with this problem on a hardware side, a hardware structure was proposed in a yet unpublished patent application that describes a switch/router which is combined of a number of separate nodes in an Ethernet ring structure. This hardware structure solves the problem existing with the tradeoff between limited memory capacity and an increased number of subscriber interfaces by spreading the communication load on a plurality of nodes that are connected by the Ethernet ring structure and thus avoiding a concentration of all interfaces in one common aggregation point.

Ethernet ring switches are generally commercially available on the market by for example B&B Electronics Manufacturing Company, 707 Dayton Road, P.O. Box 1040, Ottawa, IL 61350, USA.

In common technology, the traffic management in Ethernet ring structures is based on forwarding decisions, which are stored in a forwarding database that includes layer 2/layer 3 addresses, as well as port numbers. According to the lists stored in the forwarding database all the received data packets are forwarded to defined interfaces. Due to reliability associated aspects of these Ethernet ring structures the maintenance of the forwarding database requires a considerable effort. For instance, invalid entries have to be deleted in case of aging of the entries, respectively due to interruptions in the ring structure. In addition new entries have to be learned and data packets that are received during an instable learning period are lost.

Thus known methods for forwarding of data packets and corresponding systems of the prior art face severe disadvantages.

Consequently there exists a need for a method and system for forwarding of data packets in order to transmit data packets between the nodes of the Ethernet switch and the external interfaces of the ring structures which
- completely uses the transmission capacity of the associated Ethernet ring structure in case of normal network operation, wherein particularly the traffic has to be equally distributed to both interfaces of the Ethernet ring of a respective Ethernet node;
- provides redundant transmission links, that allow for an automated switch over in case of network interruptions in the ring area which also allow for a minimum down time after failure detection and at the same time avoid transmission loops;
- promotes a minimized size of the forwarding database (FDB) in each respective network Ethernet node, as due to the speed requirements in current technology the internal memory needs to be used, the size of which for storage of address tables is limited in practical designs.

It is an object of the present invention to provide an improved method and system for forwarding of a data packet.

This object is solved by a method for forwarding of a data packet according to claim 1 and by a system for forwarding of a data packet according to claim 15.

Advantageous embodiments of the present invention are described in the dependent claims.

The method for forwarding of a data packet according to the present invention has the considerable advantage, that upon entry of a data packet in the Ethernet switch, no modification of the forwarding database of the entry node is required and above that, the method according to the invention provides for the handling of unknown packets, which are packets, that have no entry in the forwarding database, in determining the ring interface for forwarding the unknown data packets on a first prescribed criteria from the first data packet.

In an advantageous fashion, a further embodiment of the method according to the present invention provides for an easy identification of a data packet that has entered the Ethernet switched by tagging it with its entry characteristics. In this way only the packets that need to be forwarded need to be identified and the progress of these packets on their way through the ring structure can be monitored by the nodes involved. In particular the entry node may immediately identify a packet that has run through a full circle and handle it appropriately. By this procedure, the method also ensures, that packets that enter the Ethernet switch at a certain node and due to their addressing also exit the Ethernet switch at this entry node, don't need to be tagged.

A further embodiment of the method according to the present invention in an advantageous fashion provides for further control information for respective data packets in attributing to them a state, that is in one case depending from the number of cycles the respective data packet already has circulated through the Ethernet ring, or in another case to identify failures of the ring structure in particular related to congestion or interruption of certain ring segments between respective Ethernet nodes. The attribution of status information to respective data packets ensures a detailed and appropriate handling of a respective data packet in terms for example of an elimination of the respective data packet, a redirection of the respective data packet or the execution of a network-based address search.

A further embodiment of the method according to the present invention provides the advantage, that once a data packet has run a full circle through the Ethernet ring and thus has passed all related Ethernet nodes, without retrieving an appropriate entry in the respective forwarding databases of these Ethernet nodes, that in this case it provides for a network routine in order to resolve the destination address of this data packet in a different fashion.

In an advantageous way, a further embodiment of the present invention provides for the case, that if the search for forwarding data by a network routine in one node is not successful, the packet is forwarded to the next Ethernet node, where the search again is executed. By this method it is ensured, that all possible ways to retrieve the forwarding data for the respective data packet in the Ethernet switch are exploited and that at the same time the search is only performed if required.

In a beneficial way a further embodiment of the method according to the present invention ensures that in case the forwarding data of a respective packet cannot be retrieved from respective forwarding databases and nor by a network routine, this packet is eliminated. This ensures that no unnecessary packets need to be transported in the Ethernet switch on the ring connection structure and thus traffic is optimized.

In a further expedient embodiment of the method according to the present invention it is ensured, that a data packet travelling on a first connection ring, which is interrupted in a first direction is redirected to a second connection ring and travelling there in an opposite direction. Thus it is ensured, that even in the case of a failure of a ring segment between two Ethernet nodes, a respective data packet may arrive at its destination.

In a further embodiment of the method according to the present invention it is ensured in a beneficial way that once a data packet, which has been redirected due to the failure of a ring segment reaches its entry node, the forwarding database is updated at least with data about the correct ring interface, the packet has to take in order to travel around the failed ring segment without connection loops. In this way a packet succeeding the first data packet of the same connection does not have to be redirected and upon entry in the Ethernet switch, in the respective Ethernet node may immediately travel the right path.

According to a further embodiment of the method according to the present invention, the first entry characteristics favourably comprise a tag including at least the address of the Ethernet node, which received the data packet via its external interface. In this way the entry node can easily be identified by all Ethernet nodes in the Ethernet switch.

According to a further advantageous embodiment of the method according to the present invention the tag includes at least a state of the data packet, because a state, which may be modified on the course of the packet through the Ethernet switch travelling around the respective Ethernet ring allows for a common control on actions to be performed on the data packet in the respective Ethernet nodes based on the state as a control information.

According to a further advantageous embodiment of the method according to the invention as a first prescribed criteria a hash function is applied to a header part of the first data packet in order to determine the appropriate ring interface for forwarding the data packet, because hash functions are well-known in the art and can be tailored in order to result in an even distribution of the affected data packets via the first and second ring interface.

A further embodiment of the method according to the invention provides the advantage that as a network routine an address resolution protocol request is performed. By this approach, only in cases, where the forwarding databases of the respective Ethernet nodes do not store corresponding forwarding data the network has to be accessed in order to retrieve the corresponding address data and the address resolution protocol request constitutes an appropriate means to retrieve further information.

A system for forwarding of data packets according to the present invention, implementing a corresponding method for forwarding of a data packet in a convenient way provides the advantage, that the memory space for storing the forwarding databases can be kept small, that transmission loops are avoided and that the down time is minimized after detecting a failure as well as evenly distributing traffic on both interfaces of the ring.

Subsequently embodiments of the invention are further described by examples depicted in figures, wherein
- Fig. 1: shows an example of an Ethernet switch comprised of separate nodes,
- Fig. 2: shows an example of an Ethernet node,
- Fig. 3: explains a transmission characteristic of data packets that are received at an external port of a node,
- Fig. 4: explains a transmission characteristic of a data packet that is received at an internal ring port of a node without executing of a network search,
- Fig. 5: exemplifies the transmission of known data packets in a ring without interruptions,
- Fig. 6: exemplies the transmission and elimination of unknown data packets in a ring without interruptions and without executing of a network search,
- Fig. 7: exemplifies the transmission of known data packets in a ring with an interruption,
- Fig. 8: explains the transmission characteristic of data packets which are received at an internal ring port of an Ethernet node capable of performing a network search routine,
- Fig. 9: explains the transmission of unknown data packets in an Ethernet ring without interruption and by use of a network search routine,
- Fig. 10: gives an example of a transmission of unknown data packets in a ring having an interruption and by use of a network search routine,
- Fig. 11: explains the transmission and elimination of unknown data packets in a ring without interruption and by use of a network search routine, and
- Fig. 12: explains the transmission and elimination of unknown data packets in a ring which is interrupted and by use of a network search routine.

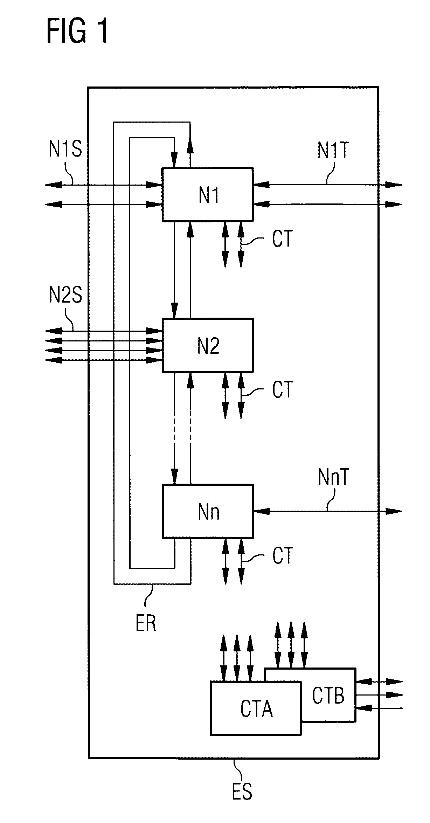

As Fig. 1 shows, an Ethernet switch ES comprises separate nodes N1, N2, Nn which are connected by an Ethernet ring structure ER that here in Fig. 1 is represented by way of two connection rings shown in the drawing equipped with arrows in order to indicate a direction of packet travel. The Ethernet nodes N1, N2, Nn are equipped with control terminals CT by way of which they are connected to a controller CTA or CTB in order to allow for a controlled packet forwarding and distribution among the Ethernet nodes. In this example at node N1 and node Nn respectively external interfaces to a transport network N1T and NnT are shown, which may be also called uplink interfaces. On the other hand nodes N1 and N2 comprise external interfaces to subscribers depicted by reference numeral N1S and N2S, which may also be identified as access interface.

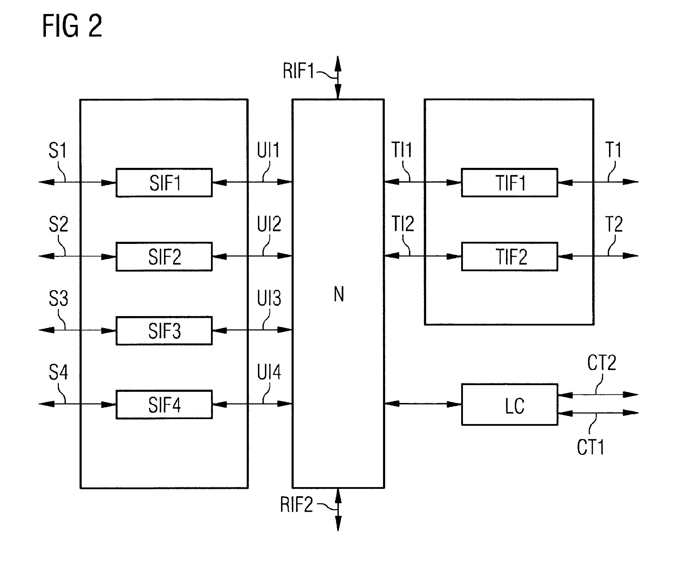

Fig. 2 gives an example of the structure of a node. Here a node N which can also be implemented as an Ethernet switch, comprises a first ring interface RIF1 and a second ring interface RIF2. Furthermore the node N is connected by subscriber interfaces SIF1, SIF2, SIF3 and SIF4 respectively to subscriber lines S1 to S4 by user interface connections UI1 to UI4. This subscriber interfaces constitute the respective access interface for the node N. Via the ring interfaces RIF1 and RIF2 the node N is connected to other nodes of the Ethernet switch, as shown for example in Fig. 1. As further external interface the node N comprises connections T1 and T2 to a transport network which are associated respectively to connecting lines TI1 and TI2 connecting interfaces TIF1 and TIF2 to the Ethernet node. Above that the node is connected to a local control LC which is able to receive and transmit control information over control lines CT2 and CT1. In communication with other nodes of the Ethernet switch, as shown in Fig. 1, the node N may appropriately forward data packets along the ring interfaces RIF1 and RIF2 and also deliver them to the subscriber lines S1 to S4 or to the transport network via connections T1 and T2.

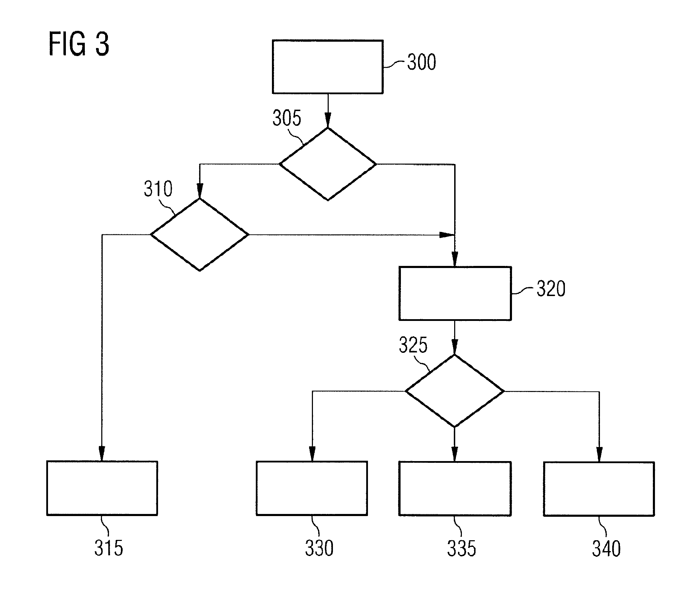

Fig. 3 gives a detailed explanation of the transmission characteristic for forwarding of data packets which are received at an external port of a node. In this case external port means not one of the ring interfaces described in Fig. 1 and Fig. 2. For instance it may be a subscriber interface SIF or a transportnet interface TIF.

At 300 the data packet is received. At 305 an inquiry is performed by consulting the forwarding database, if the destination address of the received data packet is known or unknown. In case the destination address is known, the flow branches to 310, at which the type of port is discriminated. In case the destination address relates to an external port the data packet at 315 is output at the external port which is registered in the address table of the forwarding database.

In case the port type is an internal port the flow branches to 320, which also receives the branch for unknown destination addresses from 305. In this case, it is decided, that the data packet needs to be forwarded and thus as a first entry characteristic a tag is added. The tag includes for example the address of the node and the state 0. Generally as an example the present invention may handle tags comprising different states as the following:
State 0:
   The data packet is transmitted a first time from one Ethernet node to another Ethernet node of the Ethernet ring. The destination address of the data packet will be checked at each node. In this case a known destination address means, that the data packet leaves the ring via an external interface at the respective node, and an unknown destination address means that the data packet is forwarded to the next node. At this state, the transmission is not interrupted.
State 1:
   The destination address is unknown in each Ethernet node of the ring and the data packet is transmitted a second time from Ethernet node to Ethernet node. In this case the destination address will be actively searched by a network routine, for example an address resolution protocol request, before the address will be checked. At this state, the transmission is not interrupted.
State 2:
   The transmission of the data packet was obstructed and the data packet is looped but however transmitted the first time from Ethernet node to Ethernet node. In this case the destination address like at state 0 will also be checked in each node.
State 3:
   The transmission of the data packet was obstructed. Furthermore the destination address of the data packet is unknown at each node and the data packet is transmitted a second time from Ethernet node to Ethernet node. Here also like at state 1 the destination address will actively be searched by a network routine before checking the address.

At 325 it is evaluated, if any connection to the next Ethernet node is interrupted. If not, the flow branches to 330, in which case the data packet is transmitted from the port registered in the forwarding database if it is a known data packet, or in case of an unknown data packet a port number is calculated based on prescribed criteria. In case one port is interrupted the packet is transmitted at 335 by use of the other port and the state is defined as 2. In case both ports are not connected, respectively fail, or the connection lines are congested, at 340 the packet is eliminated.

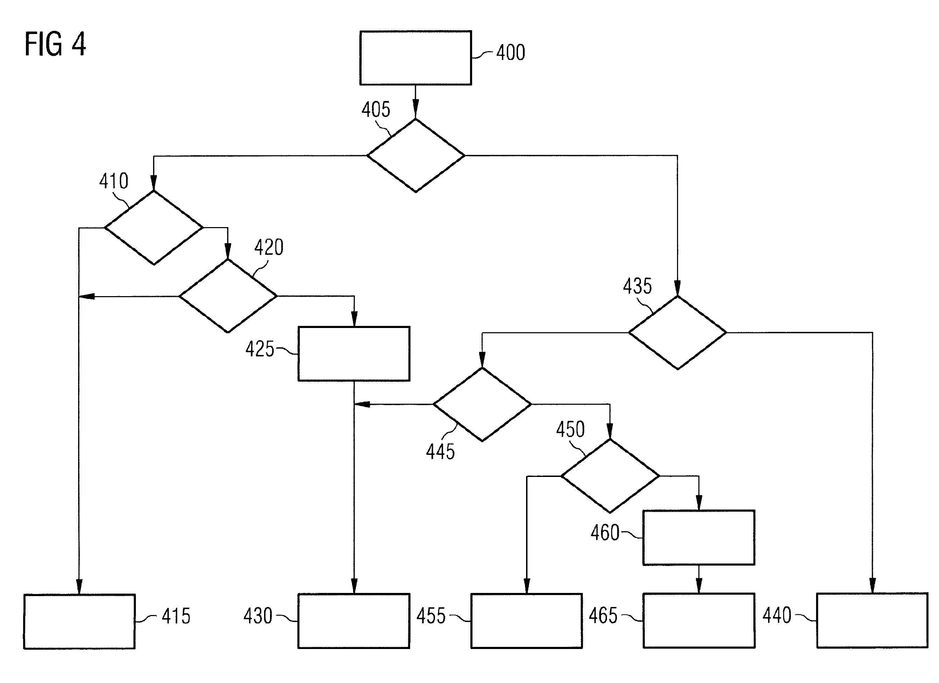

Fig. 4 gives a detailed explanation of a transmission/forwarding characteristic of data packets which are received at an internal ring port of a ring interface of an Ethernet node in a case where no network search routine is performed. At 400 the packet is received at a ring interface and at 405 a discrimination is performed, if the tag address is known. In case the tag address is known the flow branches to 410, where the state is evaluated. In case the state is 0 the packet at 415 is eliminated. In case the state is 2 a further evaluation for determining the function of the connection via a second ring interface is evaluated. In case connection fails, the packet is again eliminated at 415. In case the connection over the second ring interface works, the forwarding database is updated with the correct connection data for the respective ring interface at 425 and the data packet is transmitted via the second ring interface at 430. In case at 405 the tag address is unknown, the dataflow branches to 435 where the destination address is evaluated.

For unknown destination addresses the flow branches to 445 where it is evaluated if a connection via the second ring interface is possible. If this is the case the process flow branches to 430 which has already been described. If not, at 450 the state is evaluated and for a state of 2 the packet is eliminated at 455. For a state of 0, at 460 the state is set to 2 and the packet at 465 is retransmitted via the first ring interface. In case the destination address is known, at 440 the tag is eliminated and the packet is output at the external port registered in the forwarding database of the respective Ethernet node.

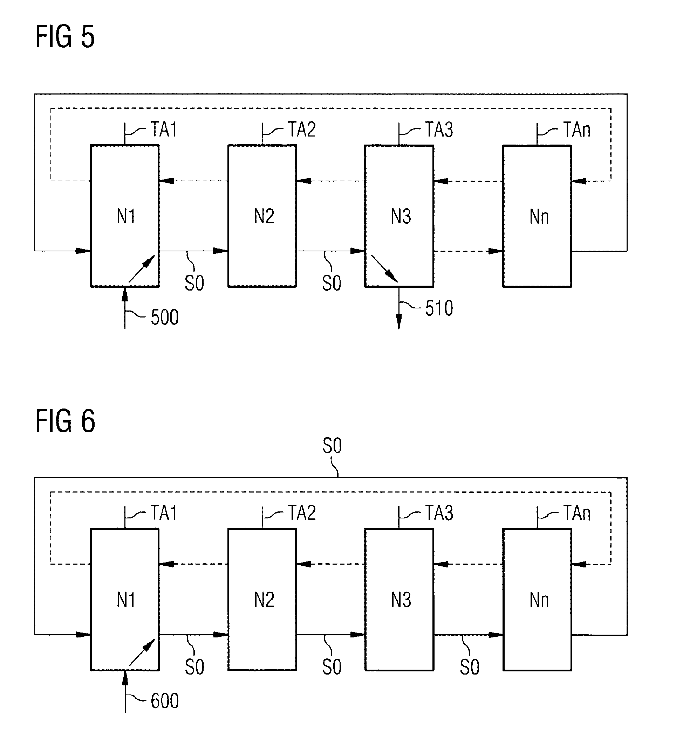

The algorithm which are described in Fig.3 and 4 are applied in examples of Fig.5 to Fig.7.

Fig. 5 exemplifies an example of a transmission of a known data packet between two nodes of an Ethernet ring without any interruption. As can be seen, each node is associated with a corresponding tag adress TA1, TA2, TA3, TAn.
In this case the data packet enters the Ethernet node N1 at 500 via an external interface.The transmission behavior for this node is described in Fig.3. A search in the forwarding database of Ethernet node N1 (Fig.3 305) results in an unknown destination address, which accordingly requires that the packet needs to be forwarded to the next Ethernet node N2. Before the transmission of the data packet is effected, the packet is equipped with a tag (Fig.3 320) including at least the address of the node N1, where the data packet entered the Ethernet switch and the state "0".In this case, the connection to the next node is not interrupted therefore, the packet can be transmitted to the node N2 (Fig.3 330).
The transmission behavior of node N2...n is described in Fig.4. Like with Ethernet node N1 an inquiry of the forwarding database of node N2 also results in the fact, that the destination address of the data packet is not known. Therefore, the data packet is forwarded to node N3 still having a status of 0, as like explained before the packet travels the Ethernet ring for the first time.Regarding Fig4, following algorithm was executed: 405 - 435 - 445 - 430 .
In this case at node 3 the tag address of the data packet is different to N3 and "unknown" 405 , the checking of the forwarding database of Ethernet node N3 results in a known destination address (Fig. 4 435), and consequently the data packet exits node N3 at (Fig. 4 440) and 510 and the tag will be eliminated.

Fig. 6 shows an example of the handling of an unknown data packet in a case of an undisturbed ring configuration. In this case the data packet enters the Ethernet node N1 from outside the Ethernet switch at 600. In an analogous fashion as already explained when describing the Fig. 5 at Ethernet nodes N1, N2, N3 as well as Nn an evaluation of the tag address and the destination address results in the fact, that at all the Ethernet nodes the destination address of the data packet is not known to the respective forwarding databases of the respective Ethernet nodes. This, because it is not listed in the respective forwarding tables and no correspondence of an appropriate IP-address and MAC-address can be found. As such then the data packet is returned to Ethernet node N1. At this point in time the evaluation of the tag address (Fig.4 405) results in the fact, that it is determined that the data packet has already passed this node.The state of the packet has to be checked, state 0 means that the packet was transmitted in a ring without disruptions (410). On the basis of this information it is then determined, that there is no possibility to forward this data packet and thus the data packet is eliminated at Ethernet node N1.

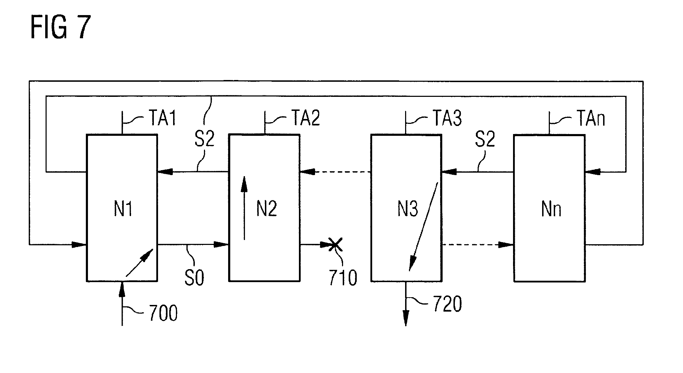

Fig. 7 gives another example for the forwarding of a data packet. According to an embodiment of the present invention, in a case, where one ring segment of the Ethernet rings connecting the Ethernet nodes N1, N2, N3 to Nn is interrupted another communication path is chosen. In this case at 700 the data packet enters Ethernet node N1 at an external interface. As the destination address is not listed in the forwarding database of Ethernet node N1, the data packet is forwarded to Ethernet node N2 having a state of 0 indicated by reference sign S0. The transmission behavior is decribed above.In this case, an interruption at second internal port of the Ethernet node N2 is assessed (Fig.4 445). Consequently, the data packet gets redirected and leaves the Ethernet node N2 with a state of 2 (Fig.4 460)indicated by reference sign S2 in the opposite direction re-entering Ethernet node N1 at the other ring interface (Fig.4 465). The data packet arrives node N1 again and consequently, its tag adr is well known (Fig.4 405). In this case (no interreption at opposite port), the Forwarding Data Base can be updated (Fig.4 425) and the packet will be transmitted to next node Nn(Fig.4 430).Subsequently the packet is transmitted from node Nn to node N3 until the consecutive evaluation of the destination address in checking the respective forwarding databases of the different Ethernet nodes that are passed, leads at node N3 to a known destination address (Fig.4 435). Accordingly, the will be eliminated and data packet exits the Ethernet switch via an external port of Ethernet node N3 at 720 (Fig.4 440) .

The transmission algorithm for ring structures which is described above in figures 3 to 7 is acceptable in applications with known MAC addresses, i.e. new MAC-addresses are registered in nodes if new subscribers are connected at the node.
For other applications without this condition, the algorithm which is described in figure 5 can be extended with a search algorithm for unknown data packets.

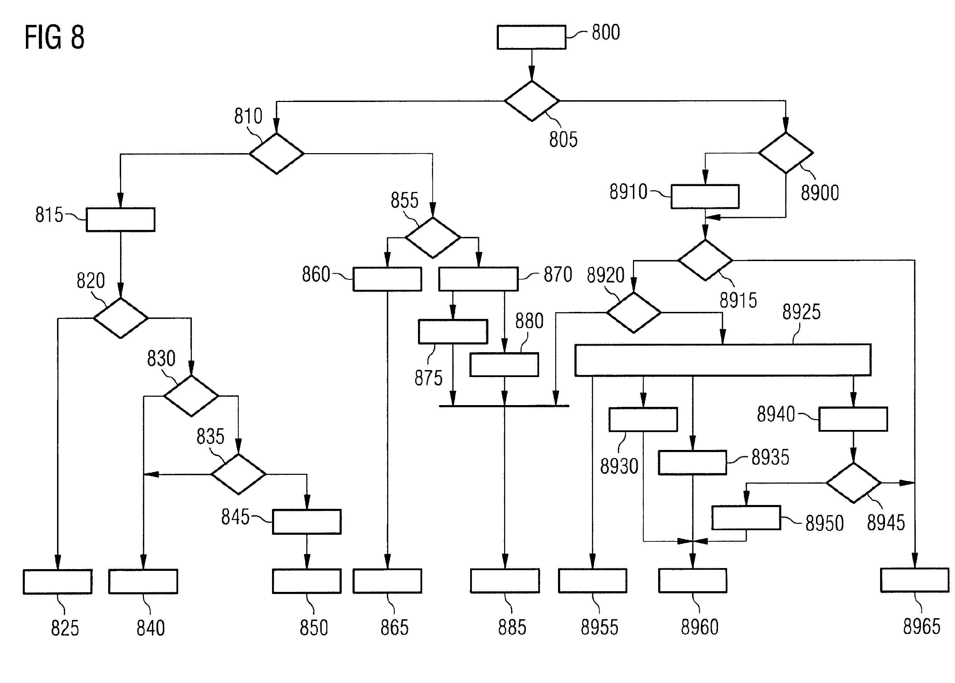

Fig. 8 gives a detailed explanation of an example of the transmission characteristic for forwarding of data packets that are received at an internal port of an Ethernet node, in a case where a search based on a network routine for the destination address can be performed in form of a process flow. At 800 the data packet is received via a first internal port of first ring interface of an Ethernet node. Immediately after the reception of the data packet at 805 it is evaluated if the tag address is known or unknown. In case of a known tag address at 810 the state is evaluated. In case of a state of 1 or 3, indicating an unknown destination address of a packet that already has passed one cycle through the Ethernet ring, a search procedure is performed at 815. This search procedure as mentioned before may be an address resolution protocol request in order to retrieve the destination address. In case a known destination address is retrieved, at 825 the tag is eliminated and the packet is output at an external port via the address registered in the table of the forwarding database. In case of an unknown destination address at 830 the connection status at the port of the second ring interface is evaluated. In case the connection fails, the packet is eliminated at 814. In case a connection is possible then at 835 the state is evaluated and if the state is 1 the packet is also eliminated at 840. In case the state is 2 at 845 the forwarding database is updated with data of the correct ring interface as well as port information and at 850 the packet is transmitted via a second ring interface port. In case the determination at 810 leads to a state of 0 or 2, at 855 a viable connection via the second ring interface port is evaluated. In case the connection is interrupted at 860 states 0 and 2 are updated to state 3 and the packet is at 865 retransmitted via a port of the first ring interface. If the connection is not obstructed at 870 a discrimination upon states is performed. For a state 0 at 875 a state is defined 1. For a state 2 at 880 the forwarding database is updated with the correct ring interface port information and at 885 the data packet is transmitted via the second ring interface port. In case at 805 it is determined that the tag address is unknown, at 8900 a discrimination upon a state is performed. In case the state is 1 or 3 at 8910 a network search routine is executed to deliver the destination address. Both branches of 8900, respectively 8910 then lead to 8915 where a destination address is evaluated. In case of an unknown destination address at 8920 the connection status via a port of the second ring interface is evaluated. If the connection is not obstructed, the process flow branches to 885, which has been described before. In case the connection is obstructed, at 8925 a state discrimination is performed. For a state of 3 the packet is eliminated at 8955. For state of 1 the state is redefined at 8930 to a state of 3 and at 8960 the data packet is retransmitted at a port of the first ring interface. For a state of 0 at 8935 the state is redefined to a state of 2 from where the dataflow also leads to 8960 which has already been described. For a state of 2 at 8940 a network search routine as in the case of 8910 and 815 is performed. At 8945 a discrimination regarding the knowledge of the destination address is performed and in case the destination address is known, at 8965 the tag is eliminated and the data packet is output at an external port registered in the table of the forwarding database. In case the destination address is unknown at 8950 the state is updated from 2 to 3 and the flow leads to 8960 which has already been described. In case of the embodiments of the present invention data packets may make use of a commonly known Ethernet frame structure the relevant part of which, i.e. the destination address is the MAC address for Layer 2-switching and the IP-address for Layer 3-routing.

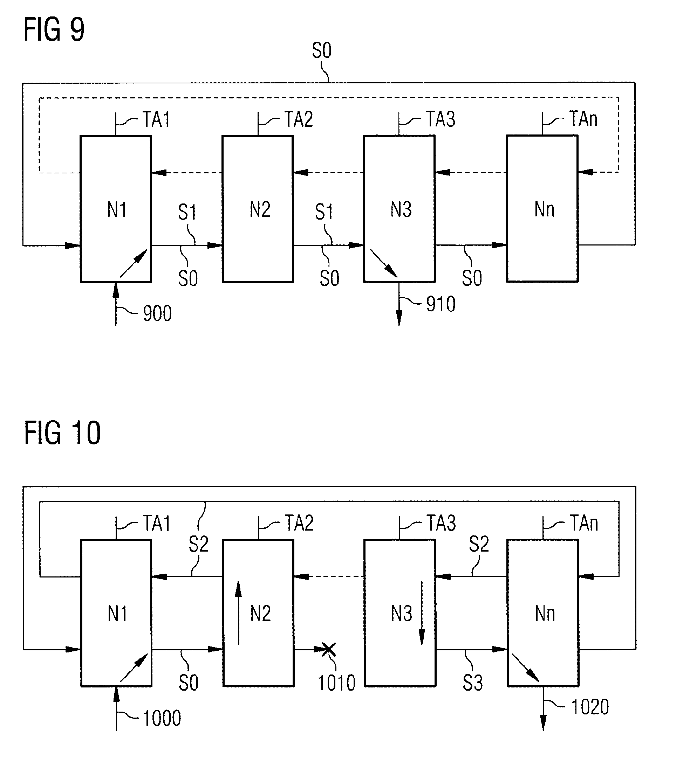

The algorithm of Fig.3 and Fig.8 are applied in examples of Fig.9 to Fig.12.

Fig. 9 explains an example of an embodiment related to a transmission of unknown data packets in an Ethernet ring without interruptions and the execution of a search routing to find the destination port of the data packet. In this case the data packet is entering the Ethernet switch form external at Ethernet node N1 at 900. A search in the forwarding database results in an unknown destination address (Fig. 3 305). The data packet is tagged as described before and subsequently transferred to the neighbouring Ethernet node N2 (Fig.3 330). At present as the data packet is circulating in the Ethernet ring for the first time the associated state in the tag is 0 indicated by reference sign S0. This process is repeated for the forwarding databases of all the passed through Ethernet nodes until the data packet coming from Ethernet node Nn with still no known destination address arrives again at Ethernet node N1 (behavior is described in Fig.6). Here Ethernet node N1 recognizes the tag (Fig.8 805) and in particular recognizes its own address in the tag thus recognizing, that the data packet has been at this Ethernet node before. In this case, as the possibility of executing a network routine for searching of the destination address exists, instead of eliminating the data packet, which would also be a possibility for a data packet which has no known destination address after passing through all the Ethernet nodes, node N1 increases the state of the data packet to 1 (Fig.8 875). The data packet having the state of 1 is then again passed onward to the other neighbouring Ethernet nodes beginning with N2. In contrast to the previous cycle here however before the destination address is evaluated (Fig.8 8915) a network search routine (Fig.8 8910) is performed such as for example an address resolution protocol request in order to retrieve the destination address. This search that at this stage of the cycling data packet is performed at each subsequent Ethernet node is successful in delivering a destination address at Ethernet node N3. From there the data packet exits at 910 via the external interface of node N3. As previously described the tag is removed before the data packet is delivered to the outside (Fig 8 8965).

Fig. 10 shows an example for the forwarding of unknown data packets in an Ethernet ring, with an interrupted connection where a network search routine may be performed. In an analogous fashion as previously described with regard to Figs. 7 and 9 the data packet is entering from outside at 1000 into Ethernet node N1. At this node, as no destination address to the packet can be allocated at the associated forwarding database, the data packet is transferred with a state of 0 to the neighbouring Ethernet node N2. Here a failure of a connection to node N3 between Ethernet node N2 and N3 is indicated at 1010. As such consequently the packet is redirected to the second interface of Ethernet node N2, the associated state is changed to 2 and the packet is moved onward in the opposite direction back to Ethernet node N1. There, it is recognized that the data packet has already been at Ethernet node N1 from the node address in the tag. In this direction the data packet is then circled around the Ethernet ring through node Nn until it arrives at Ethernet node N3. At all of the intermediate nodes, by checking the associated forwarding databases no destination address can be found. Subsequently, as node N3 is the neighbour node to N2 with the failing ring connection at 1010 the packet state is changed from 2 to 3 (Fig.8 8930) identifying that the destination address is unknown at each node and circled back (Fig. 8 8960) to node Nn. At each subsequent node a search based on a network routine is now performed (Fig. 8 8910) at this state of the data packet in order to retrieve the destination address. In this case for example an address resolution protocol request may be issued to allocate the appropriate address of the data packet. Here in Fig. 10 the retrieval attempt of the data address is successful (Fig. 8 8915) at Ethernet node Nn, which results in outputting the data packet at 1020 from Ethernet node Nn after the tag has been removed from it (Fig. 8 8965).

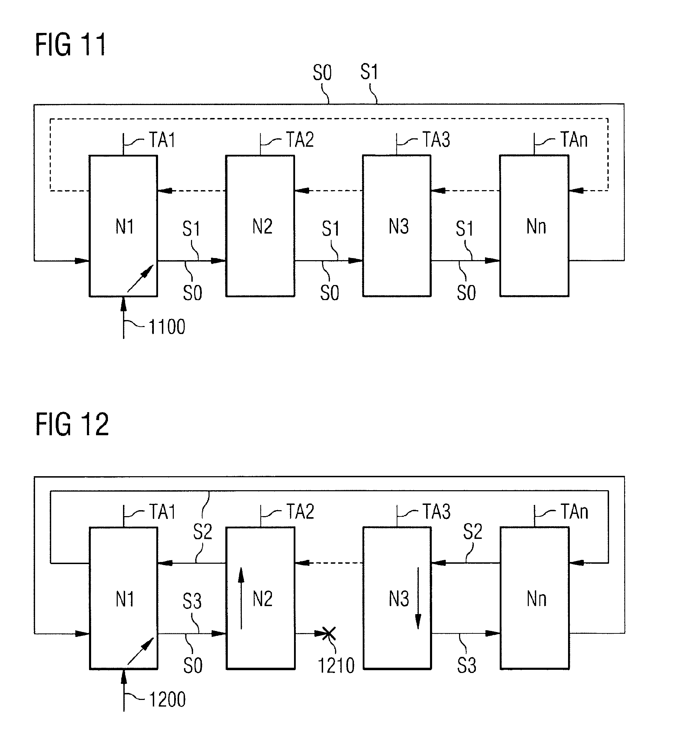

Fig. 11 shows an example of the forwarding of a data packet which is unknown in an Ethernet ring having no disturbed connection with the availability of a network search routine to determine the destination address, where a data packet is eliminated. The process that is executed to forward the data packet along the Ethernet nodes of Fig. 11 is much the same as the one that has been described with regard to Fig. 9. Therefore, only the difference between the forwarding of the data packet of Fig. 9 and the one of Fig. 11 is described.

In this case the data packet enters via an external interface into the Ethernet switch at Ethernet node N1 at 1100. In the first cycle the data packet is transferred through all of the Ethernet nodes N1, N2, N3 and Nn of the Ethernet switch having a state of 0. In this case however all of the nodes are not capable of finding the destination address in their forwarding database. Therefore, after passing Ethernet node N1 a second time the state of the data packet is increased to 1 at Ethernet node N1 and then again passed through the remaining nodes of the Ethernet ring N2, N3 to Nn wherein in this cycle through the Ethernet ring a network search routine is performed at each Ethernet node before checking on the presence of the destination address in the forwarding database. In this case however contrary to the example explained in Fig. 9 no destination address in spite of the network search routine can be retrieved. Therefore, after the data packet arrives at the Ethernet node N1 after the second cycle, having a state of 1 (Fig.8 810) and the associated search by a network routine (Fig.8 815) is not retrieving a destination address of the packet (Fig. 8 820), the data packet is discarded (Fig. 8 840).

Fig. 12 shows an example of the forwarding of a data packet in an Ethernet switch in a similar fashion as the example shown in Fig. 10, where in contrast to the previous example in Fig. 10 no destination address can be allocated. Here in an analogous fashion as explained at Fig. 10, the data packet enters via the external interface of Ethernet node N1 at 1200 and is passed onward in a first cycle as already explained in the context of Fig. 10, passing around the failing Ethernet ring section in that it is redirected at Ethernet node N2 associated with a state change to the state of 2 and cycling backward via the second ring interfaces of the Ethernet nodes through all of the involved Ethernet nodes N1 to Nn until it arrives at Ethernet node N3. Like before at the example of Fig. 10, no destination address could be allocated in checking on the address tables stored in each of the forwarding databases of the respective nodes N1, N2, N3 to Nn. Therefore at node N3 the status is then changed to 3 which indicates a data packet with unknown destination address which during the back cycle of the data packet through the Ethernet ring via Ethernet node Nn to Ethernet node N2 causes a search by a network routine to be performed, for example an address resolution protocol request to determine the destination address before trying to allocate it in the respective forwarding databases. However in this case, along the whole cycle from Ethernet node Nn to Ethernet node N2 no appropriate destination address is delivered. Therefore at Ethernet node N2, once the second cycle through the interrupted network is completed and no destination address for the data packet could be identified (Fig.8 8915), the data packet is eliminated (Fig.8 8955).

By following the method of the present invention examples of which have been described before the address tables that need to be maintained current in order to forward data packets in high speed networks can be kept small going along with the advantage, that the small memory space that is available in the associated equipment may be used and is sufficient even in an environment of an increased number of subscriber interfaces. An example for marking a respective Ethernet node is the address of the slot address of the node, which marks the physical position of the node which can be used as a tag.

The method and system according to the present invention allows for a decentralized control of the transmission and forwarding of data packets in Ethernet switches that use separate Ethernet nodes connected by Ethernet rings. It particularly has the advantage of easily structured and standardized nodes; it is available in a scalable implementation. Furthermore an algorithm controlling a single Ethernet node only needs local information. Moreover the address tables that need to be available for the forwarding of the data packets can be distributed on all nodes and no particular large central forwarding database is needed. Above that unknown data packets can be forwarded by the method and system according to the present invention that have no entry in the forwarding database. The method according to the invention may as well be used for forwarding data packets between external interfaces such as uplink- and downlink-interfaces and in an advantageous fashion in cases without any communication disturbance at the Ethernet ring structure all the available transmission paths can be used and thus a maximum transmission capacity is delivered.
The invention may be used in the context of an optical line termination OLT for a hybrid passive optical network HPON.

## Claims

1. Method for forwarding of data packets through an Ethernet switch (ES) comprising a plurality of Ethernet nodes (N1, ..., Nn) at least connected to each other by respectively a first and a second ring interface (RIF1, RIF2), and at least one external interface (S1, ..., S4, T1, T2) for transmission and/or reception of a data packet, **wherein** upon entry of a first data packet in a respective first Ethernet node (N1) a respective first database of the first Ethernet node (N1) is searched to allocate first forwarding data associated to first address data of the first data packet, and in case the first forwarding data are present, the first data packet is forwarded according to the first forwarding data, and in case no first forwarding data are present the first data packet is forwarded by either the first or second ring interface (RIF1, RIF2) which is determined by a first prescribed criteria from the first data packet.

2. Method according to claim 1, **wherein** the first data packet to be forwarded to a second Ethernet node (N2) is marked by first entry characteristics (TA1) identifying the location of entry of the first data packet into the Ethernet switch (ES), and wherein upon entry of the first data packet in the second Ethernet node (N2) the first entry characteristics are compared to second characteristics (TA2) of the second Ethernet node (N2) and a respective second database of the second Ethernet node (N2) is searched to allocate first forwarding data associated to first address data of the first data packet, and in case the first forwarding data are present, the first data packet is forwarded according to the first forwarding data; and in case no first forwarding data are present the first data packet is forwarded to a next Ethernet node (N1, ..., Nn).

3. Method according to claim 1 or 2, wherein the first data packet to be forwarded to another Ethernet node (N2, N3, ..., Nn) is attributed with a state (S0, S1, S2, S3) as control information for forwarding the first data packet at least depending from a number of cycles the first data packet has run through a ring of Ethernet nodes (N1, N2, N3, Nn).

4. Method according to claim 1 or 2, **wherein** the first data packet to be forwarded to another Ethernet node (N2, N3, ..., Nn) is attributed with a state (S0, S1, S2, S3) as control information for forwarding the first data packet at least depending from a connection state of the Ethernet nodes in a ring.

5. Method according to any of the claims 2 to 4, **wherein** if the second characteristics of the Ethernet node (N1, N2, N3, Nn), the first data packet was forwarded to correspond a first time to the first entry characteristics, a search of first forwarding data based on a network routine is performed; and in case the first forwarding data are retrieved, the first data packet is forwarded according to the first forwarding data.

6. Method according to claim 5, **wherein** in case the first forwarding data cannot be retrieved by the network routine, the first data packet is forwarded to the next Ethernet node (N2, N3, Nn), where the search of first forwarding data is again performed according to a network routine, and if the first forwarding data are retrieved, the first data packet is forwarded according to the first forwarding data.

7. Method according to claim 6, **wherein** if the second characteristics of the Ethernet node (N1, N2, N3, Nn) the first data packet was transferred to corresponds a second time to the first entry characteristics, the first data packet is eliminated.

8. Method according to any of the claims 2 to 7, **wherein** the first data packet can be forwarded between the respective Ethernet nodes (N1, N2, N3, Nn) on respective ring segments respectively connecting the respective first (RIF1) and the respective second (RIF2) ring interfaces of the Ethernet nodes (N1, N2, N3, Nn) forming a first connection ring between the first ring interfaces (RIF1) and a second connection ring between the second ring interfaces (RIF2), wherein if one ring segment of a respective connection ring fails, the first data packet is redirected to the second connection ring and forwarded on the second connection ring in an opposite direction.

9. Method according to claim 8, **wherein** if the redirected first data packet arrives at an Ethernet node (N1, N2, N3, Nn) the second characteristics of which correspond to the first entry characteristics, the database of this Ethernet node is completed with first forwarding data identifying the ring interface (RIF1, RIF2) allowing a subsequent data packet belonging to a same connection as the first data packet to be forwarded in only one direction on the respective connection ring.

10. Method according to any of the claims 2 to 9, **wherein** the first entry characteristics comprises a tag including the address of the Ethernet node, which received the first data packet via the external interface (S1, ..., S4; T1, T2).

11. Method according to claim 10, dependent at least from claim 3 or 4, **wherein** the tag includes a state.

12. Method according to any of the claims 1 to 11, **wherein** as determination by the first prescribed criteria a hash function is performed on a header part of the first data packet.

13. Method according to any of the claims 1 to 12, **wherein** as a network routine an address resolution protocol request is issued.

14. System for forwarding of a data packet by an Ethernet switch (ES), the Ethernet switch consisting of at least two Ethernet nodes (N1, N2), each Ethernet node having a first ring interface (RIF1) and a second ring interface (RIF2), the respective first ring interfaces (RIF1) being connected to form a first Ethernet connection ring and the respective second ring interfaces (RIF2) being connected to form a second Ethernet connection ring, **wherein** at least one of the Ethernet nodes (N1, N2, N3, Nn) comprises a subscriber interface (SIF1, ..., SIF4) and/or a transport network interface (TIF1, TIF2) for receiving/transmitting data packets, and wherein the Ethernet switch (ES) implements a method for forwarding of data packets according to any of the claims 1 to 13.
